# EUROPÄISCHE PATENTSCHRIFT

(11) **EP 0 604 439 B1**
(45) Veröffentlichungstag und Bekanntmachung des Hinweises auf die Patenterteilung: **20.11.1996**
(21) Anmeldenummer: 92915065.4
(22) Anmeldetag: 17.07.1992
(51) Int. Cl.: B23K 9/32, B21C 37/26

(54) **RIPPENROHR**
FINNED TUBE
TUBE A AILETTES

(30) Priorität: 03.08.1991 DE 4125789
(43) Veröffentlichungstag der Anmeldung: 06.07.1994
(73) Patentinhaber: ROSINK APPARATE- UND ANLAGENBAU GmbH, D-48511 Nordhorn (DE)
(72) Erfinder: BRÜNDERMANN, Georg, D-4452 Thuine (DE)
(74) Vertreter: Lippert, Hans-Joachim, Dipl.-Ing.
(86) Internationale Anmeldenummer: DE9200591
(87) Internationale Veröffentlichungsnummer: WO9302829

(56) Entgegenhaltungen:
- FR-A- 2 342 817
- FR-A- 2 421 010
- FR-A- 2 458 346
- GB-A- 1 120 385
- US-A- 3 662 942

## Beschreibung

Die Erfindung betrifft ein Rippenrohr aus Metall, insbesondere Wärmeaustauscherrohr, bestehend aus einem zylindrischen Rohrkörper sowie einem schraubenlinig auf diesen aufgewickelten Band, dessen breite Seiten etwa senkrecht zur Rohroberfläche verlaufen und dessen der Rohroberfläche zugewandte Schmalseite über eine unter Zuhilfenahme eines Zusatzwerkstoffes gebildete Schweißnaht mit der Rohroberfläche verbunden ist, sowie ein Verfahren zu seiner Herstellung. Das Verfahren besteht darin, daß einem in Rotation versetzten Rohrkörper mindestens ein die Rippen bildendes, endloses Band tangential zugeführt und auf diesem etwa schraubenlinig aufgewickelt wird, daß die dem Rohrkörper zugewandte Schmalseite des Bandes mittels einer Schweißeinrichtung unter Verwendung eines Zusatzwerkstoffes mit der Rohroberfläche verbunden wird und daß das Arbeitsende der Schweißeinrichtung in den freien Keil zwischen der Rohroberfläche und dem aufzuwickelnden Band geführt wird.

Ein Verfahren der genannten Art ist aus der FR-A1-2458346 bekannt. Bei diesem bekannten Verfahren wird das die Rippen bildende endlose Band schräg von oben zugeführt, vorgewärmt und dann durchhängend dem Rohrkörper zugeführt. Die Schweißeinrichtung wird in einer Position senkrecht zur Achse des Rohrkörpers geführt. Zur Aufbringung der Schweißnaht wird ein Schweißdraht verwendet, der einen relativ großen Querschnitt aufweist, um sicherzustellen, daß eine Schweißnaht mit der Breite von etwa der dreifachen Dicke des aufzubringenden Bandes entsteht. Mit diesem bekannten Verfahren lassen sich Schweißgeschwindigkeiten in der Größenordnung von 1,5 bis 2 m pro Minute erzielen.

Ferner ist ein Verfahren bekannt (GB-A1-120385 und FR-A2-2421010), bei dem ohne Zusatzwerkstoff gearbeitet wird, indem das Material des Rohrkörpers sowie des aufzuschweißenden Bandes mit einer sich nicht aufzehrenden Elektrode aufgeschmolzen wird.

Bei einem anderen bekannten Verfahren (DE-PS 35 08 878) wird das die Rippe bildende Band einseitig mit dem Rohrmantel verschweißt. Um hierbei größere Wärmeaustauschflächen wirkungsvoll nutzen zu können, ist die vorzusehende Schweißnaht relativ breit auszubilden, wodurch der Nachteil eines erhöhten Bedarfs an Schweißzusatzwerkstoff sowie Schweißenergie einhergeht. Darüber hinaus können im nachhinein Schrumpfrisse sowie eine erhöhte Korrosionsbildung auftreten. Die Schweißeinrichtung wird bei den bekannten Verfahren seitlich neben dem aufzuwickelnden Band geführt.

Bei einem anderen bekannten Verfahren (DE-GM 91 02 944) sollen auf beiden Seiten der Rippe Schweißnähte gezogen werden, damit die Rippe über die gesamte Breite ihrer Schmalkante mit dem Rohrkörper verbunden ist. Dieses Verfahren läßt sich nur dann anwenden, wenn die einzelnen Rippen des aufgewickelten Bandes einen derart ausreichenden Abstand voneinander aufweisen, daß die zweite Schweißeinrichtung in die Lücke zwischen zwei Rippen eingeführt werden kann. Ansonsten treten aber die gleichen Nachteile auf wie bei dem erstgenannten bekannten Verfahren.

Ferner besteht bei den bekannten Verfahren der Nachteil, daß das Aufbringen der relativ dicken Schweißnähte nur geringe Arbeitsgeschwindigkeiten zuläßt.

Der Erfindung liegt die Aufgabe zugrunde, eine neue Herstellmethode für Rippenrohre zu entwickeln, die mit geringem Aufwand wirtschaftlich und energiesparend arbeitet und mit der mehrfach höhere Schweißgeschwindigkeiten erzielbar sind.

Erfindungsgemäß wird diese Aufgabe mit einem Verfahren gelöst, welches dadurch gekennzeichnet ist, daß die Schweißeinrichtung unter dem gleichen Winkel relativ zur Rohrachse geführt wird wie das zuzuführende, die Rippen bildende Band, daß mit Hilfe der Schweißeinrichtung auf der Rohroberfläche unter Verwendung des Zusatzwerkstoffes vor dem Auftreffen der zu verbindenden Schmalseite des Bandes eine Schweißraupe aufgebracht wird, die genau in dem Verbindungsbereich des Bandes mit der Rohroberfläche verläuft, daß die Schweißraupe etwa so breit wie die Dicke des Bandes ausgebildet wird, und daß die zu verbindende Schmalseite des Bandes in die noch flüssige Schweißraupe gedrückt wird.

Das erfindungsgemäße Verfahren läßt sich mit geringstmöglicher Energie und einer sehr geringen Menge an Schweißzusatzwerkstoff durchführen. Darüber hinaus zeichnet sich dieses Verfahren dadurch aus, daß mit einer mehrfach höheren Schweißgeschwindigkeit als bei dem herkömmlichen Schweißverfahren gearbeitet werden kann. Die Verbindung zwischen dem Rohrwerkstoff und der Schweißnaht ist als metallurgischer Verbund anzusehen. In Abhängigkeit von den gewählten Randbedingungen ist es bei Bedarf auch möglich, eine metallurgische Verbindung zwischen dem Rippenfuß und der Schweißnaht zu erzeugen. Durch eine solche optimale Verschweißung wird ein ungestörter Wärmetransport zwischen Rohr und Rippe sichergestellt und es werden Überhitzungszonen vermieden. Die auf der Rohroberfläche aufzubringende Schweißraupe, die nur eine relativ geringe Dicke aufzuweisen braucht, ist etwa so breit ausgebildet wie die Dicke des Bandes. Dadurch wird sichergestellt, daß sich die Schweißnaht zuverlässig über die gesamte Breite des Verbindungsbereichs erstreckt und ggf. seitlich noch ein Stück über die jeweilige Rippe vorsteht.

Das auf die Rohroberfläche aufzuwickelnde Band wird zweckmäßig unter Zugspannung gehalten, so daß das Band mit einer gewissen Druckkraft in die Schweißnaht hineingedrückt wird.

Es ist jedoch auch möglich, das die Rippen bildende Band durch eine in radialer Richtung aufgebrachte Kraft gezielt in die Schweißraupe hineinzudrücken, wodurch die Schweißverbindung noch verbessert werden kann.

Um auf eine durchgehend innige Schweißverbindung hinzuwirken, kann zusätzlich die zu verbindende Schmalseite des Bandes mittels der Schweißeinrichtung aufgeschmolzen werden.

Zur Optimierung des Schweißverfahrens wird der Schweißbereich zweckmäßig mit Schutzgas beaufschlagt.

Bei dem erfindungsgemäßen Rippenrohr weist die Schweißnaht über ihre gesamte Breite eine etwa konstante, vergleichsweise geringe Dicke auf.

Der Querschnitt der Schweißnaht ist vorzugsweise nach Art eines Rechtecks ausgebildet, dessen Langseiten parallel zur Rohroberfläche verlaufen.

Vorzugsweise steht die Schweißnaht auf beiden Seiten ein Stück über das angeschweißte Band hinaus vor.

Die Erfindung ist in der Zeichnung beispielsweise veranschaulicht und im nachstehenden im einzelnen anhand der Zeichnung beschrieben. Es zeigen:
- Fig. 1: in schematischer Darstellung eine perspektivische Ansicht der Vorrichtung,
- Fig. 2: eine Draufsicht auf die Vorrichtung im Bereich des aufzuwickelnden Bandes,
- Fig. 3: einen Schnitt durch das Rohr im Bereich der Schweißeinrichtung,
- Fig. 4: einen Schnitt entlang der Linie I-I aus Fig. 3,
- Fig. 5: einen schnitt entlang der Linie II-II aus Fig. 3,
- Fig. 6: einen Schnitt entlang der Linie III-III aus Fig. 3 und
- Fig. 7: einen Schnitt durch einen Teil des fertigen Rippenrohrs im Bereich der Schweißnaht.

Nach der Zeichnung besteht das Wärmeaustauscherrohr 1 aus einem Rohrkörper 2, auf dessen Oberfläche 3 ein von einer in der Zeichnung nicht dargestellten Vorratsrolle zu entnehmendes Rippenband 4 zwecks Vergrößerung der Wärmeaustauschfläche wendelförmig aufgebracht und mit der Rohroberfläche über eine Schweißnaht 5 verbunden wird.

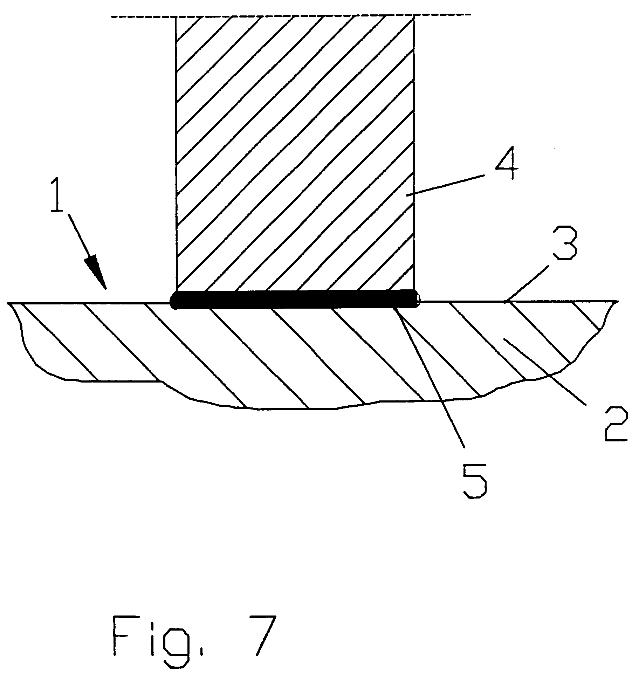

Wie insbesondere aus Fig. 7 zu erkennen ist, in der eine idealisierte Ausführungsform dargestellt ist, weist die Schweißnaht 5 über ihre gesamte Breite eine etwa konstante, vergleichsweise geringe Dicke auf. Der Querschnitt der Schweißnaht 5 ist nach Art eines Rechtecks ausgebildet, wobei die Langseiten des Rechtecks parallel zur Rohroberfläche verlaufen. In der Praxis ist es aber auch möglich, daß je nach den gewählten Schweißbedingungen die Schweißnaht 5 leicht bogenförmig verläuft, wobei sie zur Mitte hin etwas durchhängt. Auf beiden Seiten steht die Schweißnaht 5 ein Stück über das angeschweißte Band 4 hinaus vor.

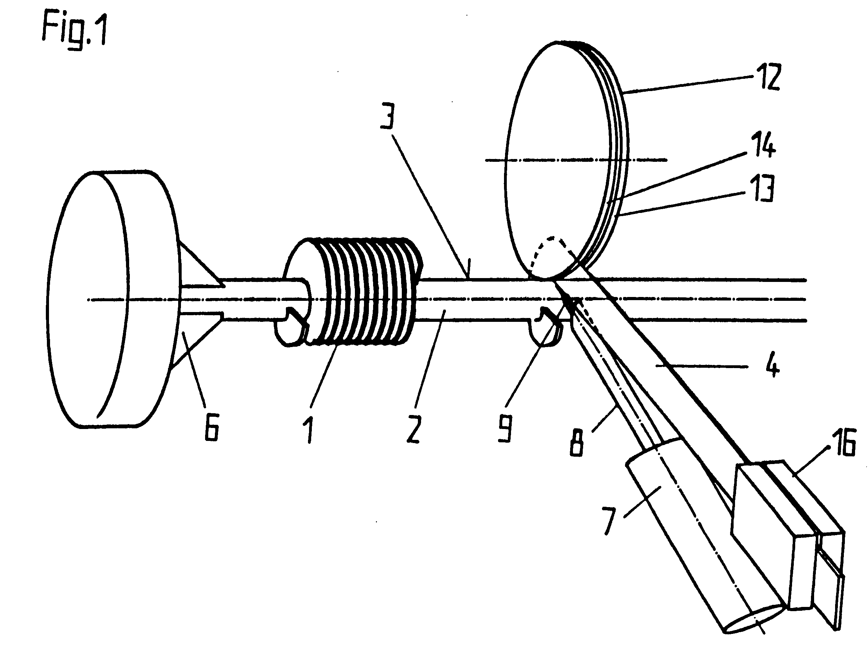

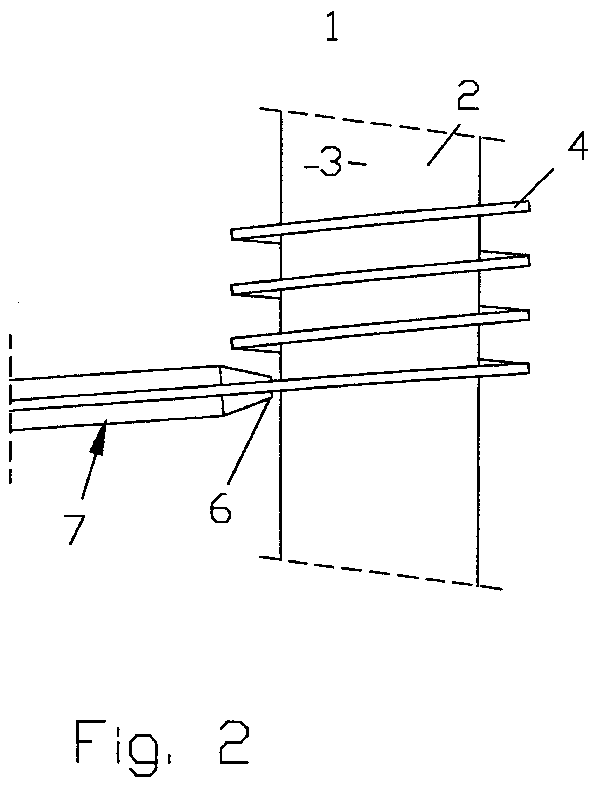

Nach Fig. 1 und 2 besteht die Vorrichtung, auf der das Wärmeaustauscherrohr 1 hergestellt wird, aus einer Einspanneinrichtung 6, einer nicht näher dargestellten Antriebseinrichtung für die Einspanneinrichtung 6 zum Drehen des Rohrkörpers 2 um seine Längsachse und einem zur Aufnahme der Bandvorratsrolle sowie der Schweißeinrichtung 7 dienenden, nicht näher dargestellten Schlitten, der in Längsrichtung des Rohrkörpers 2 parallel zur Rohrachse verfahrbar ist.

Von der Schweißeinrichtung 7 ragt eine Elektrode 8 in den freien Keil zwischen der Rohroberfläche 3 und dem tangential auf den Rohrkörper 2 aufzuwickelnden Band 4. Durch die Elektrode 8 ist ein sich aufzehrender, endloser Schweißdraht 9, der als Schweißzuschlagwerkstoff dient, automatisch zuführbar.

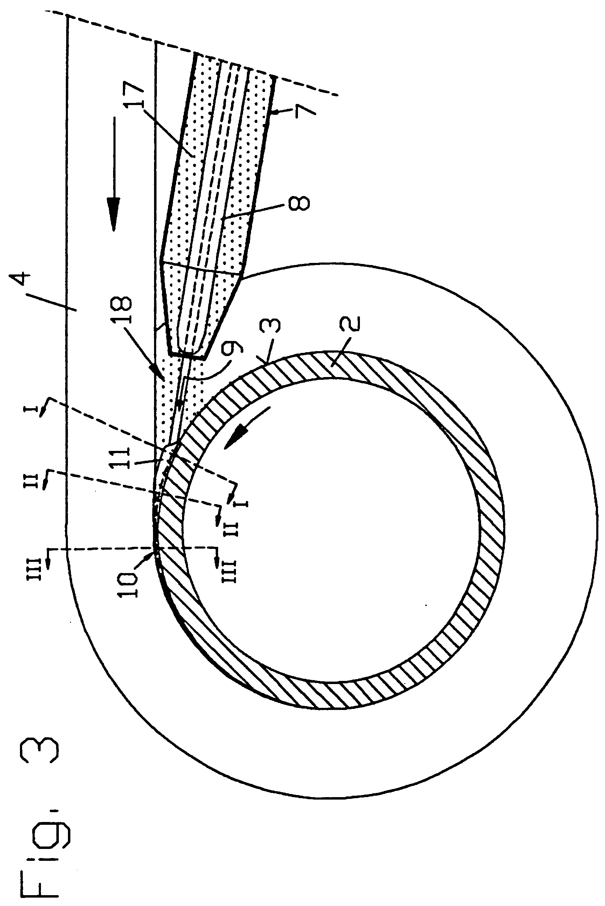

Wie insbesondere aus Fig. 3 zu entnehmen ist, wird der Schweißdraht 9 in einem Abstand vor dem Auftreffbereich 10 des aufzuwickelnden Bandes 4 gegen die Rohroberfläche 3 zugeführt. In dem Lichtbogen, der zwischen dem Ende des Schweißdrahtes 9 und der Rohroberfläche 3 entsteht, schmilzt der Schweißdraht 9 und erzeugt auf der Rohroberfläche 3 eine Schweißraupe 11, in die die in Fig. 3 nach unten weisende Kante des aufzuwickelnden Bandes 4 allmählich eintaucht.

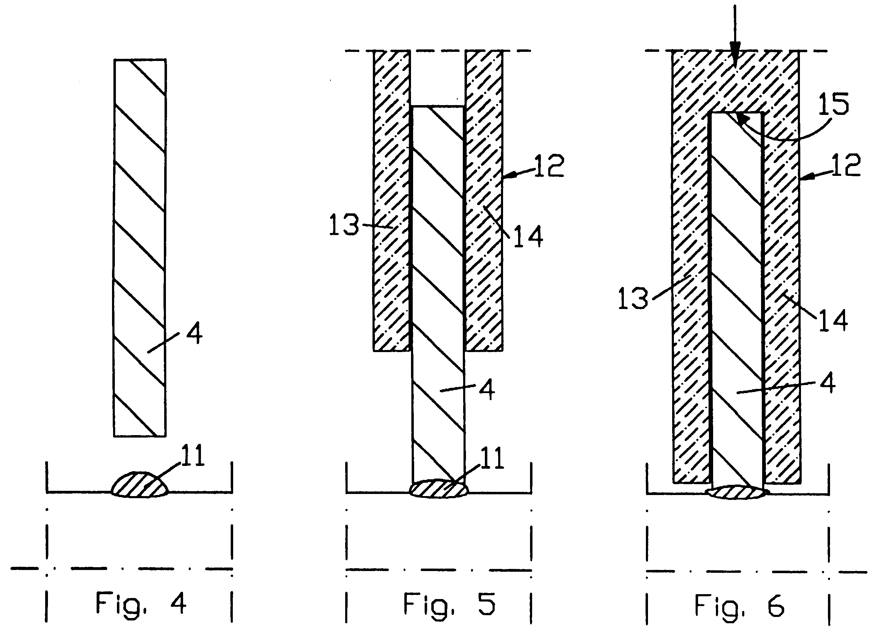

Wie in Fig. 1 dargestellt ist, ist unmittelbar über bzw. in kurzem Abstand hinter dem Auftreffbereich 10 des auf den Rohrkörper 2 aufzuwickelnden Bandes 4 eine Führungsrolle 12 für das Band 4 angeordnet, die das Band 4 mit seitlichen Flanschen 13 und 14 übergreift. Details sind den vergrößerten Schnitten in den Figuren 4 bis 6 zu entnehmen. Wie insbesondere aus Fig. 6 zu erkennen ist, weist die Führungsrolle 12 am Grund des durch die beiden Flanschen 13 und 14 gebildeten Aufnahmebereichs eine zylindrische Druckfläche 15 auf, die eine Druckkraft auf die nach oben gerichtete freie Kante des Bandes 4 ausübt, wodurch das Band 4 sehr gezielt und mit hohem Druck in die zuvor auf der Rohroberfläche 3 aufgebrachte Schweißraupe 11 hineingedrückt wird.

Eine gewisse Anpreßkraft läßt sich auch bereits dadurch erzielen, daß das Band 4 beim Aufwickeln mittels einer in Fig. 1 schematisch dargestellten Spanneinrichtung 16 unter Vorspannung gehalten wird. Der zusätzliche Anpreßdruck durch die Druckfläche 15 der Führungsrolle 12 bewirkt aber eine besonders zuverlässige und innige Verbindung zwischen dem Band 4 und der Rohroberfläche 3.

Je nach den vorgegebenen Randbedingungen, insbesondere durch die Auswahl der Elektrode sowie die weiteren Betriebsbedingungen, kann auch die Unterseite des Bandes 4 aufgeschmolzen werden, so daß durchgehend vom Rohrkörper 2 über die Schweißnaht 5 in die Rippen eine metallurgische Verbindung ausgebildet wird, durch die ein ungestörter Wärmetransport sichergestellt ist.

Wie in Fig. 3 dargestellt ist, sitzt die Elektrode 8 in einem Haltekopf 17, der gleichzeitig auch zur Zuführung eines den Schweißbereich umschließenden Schutzgases 18 dient.

Bei Anwendung des erfindungsgemäßen Verfahrens, welches man als Schmelz-Füge-Preß-Schweißverfahren bezeichnen kann, wird ein Produkt von besonders guter Qualität erzeugt. Das Verfahren ist auch bei sehr engem Rippenabstand anwendbar. Die aufzubringende Schweißenergie sowie der Schweißzusatzwerkstoff sind bei wesentlich höherer Arbeitsgeschwindigkeit die gleichen wie bei herkömmlichen Schweißverfahren, das heißt, daß pro Meter Schweißnaht nur ein Bruchteil der bisherigen Energie und ein Bruchteil des bisherigen Schweißzusatzwerkstoffs benötigt werden.

### Bezugszeichenliste

- 1: Wärmetauscherrohr
- 2: Rohrkörper
- 3: Rohroberfläche
- 4: Rippenband
- 5: Schweißnaht
- 6: Einspanneinrichtung
- 7: Schweißeinrichtung
- 8: Elektrode
- 9: Schweißdraht
- 10: Auftreffbereich
- 11: Schweißraupe
- 12: Führungsrolle
- 13: seitlicher Flansch
- 14: seitlicher Flansch
- 15: zylindrische Druckfläche
- 16: Spanneinrichtung
- 1: 7 Haltekopf
- 18: Schutzgas

## Patentansprüche

1. Verfahren zur Herstellung von Rippenrohren aus Metall, insbesondere von Wärmetauscherrohren (1), wobei einem in Rotation versetzten Rohrkörper (2) mindestens ein die Rippen bildendes, endloses Band (4) tangential zugeführt und auf diesem etwa schraubenlinig aufgewickelt, die dem Rohrkörper (2) zugewandte Schmalseite des Bandes (4) mittels einer Schweißeinrichtung (7) unter Verwendung eines Zusatzwerkstoffes mit der Rohroberfläche verbunden und das Arbeitsende der Schweißeinrichtung (7) in den freien Keil zwischen der Rohroberfläche (3) und dem aufzuwickelnden Band (4) geführt wird, **dadurch gekennzeichnet**, daß die Schweißeinrichtung (7) unter dem gleichen Winkel relativ zur Rohrachse geführt wird wie das zuzuführende, die Rippen bildende Band (4), daß mit Hilfe der Schweißeinrichtung (7) auf der Rohroberfläche (3) unter Verwendung des Zusatzwerkstoffes vor dem Auftreffen der zu verbindenden Schmalseite des Bandes (4) eine Schweißraupe (11) aufgebracht wird, die genau in dem Verbindungsbereich des Bandes (4) mit der Rohroberfläche (3) verläuft, daß die Schweißraupe (11) etwa so breit wie die Dicke des Bandes (4) ausgebildet wird, und daß die zu verbindende Schmalseite des Bandes (4) in die noch flüssige Schweißraupe (11) gedrückt wird.

2. Verfahren nach Anspruch 1 oder 2, **dadurch gekennzeichnet**, daß das auf die Rohroberfläche (3) aufzuwickelnde Band (4) unter Zugspannung gehalten wird.

3. Verfahren nach Anspruch 1 oder 2, **dadurch gekennzeichnet**, daß das auf die Rohroberfläche (3) aufzuwickelnde Band (4) durch eine in radialer Richtung aufgebrachte Kraft in die Schweißraupe (11) gedrückt wird.

4. Verfahren nach einem der Ansprüche 1 bis 3, **dadurch gekennzeichnet**, daß auch die zu verbindende Schmalsleite des Bandes (4) mittels der Schweißeinrichtung (7) aufgeschmolzen wird.

5. Verfahren nach einem der Ansprüche 1 bis 4, **dadurch gekennzeichnet**, daß der Schweißbereich mit Schutzgas (18) beaufschlagt wird.

6. Rippenrohr aus Metall, insbesondere Wärmeaustauscherrohr, hergestellt nach dem Verfahren gemäß einem der Ansprüche 1 bis 5, bestehend aus einem zylindrischen Rohrkörper (2) sowie einem schraubenlinig auf diesen aufgewickelten Band (4), dessen breite Seiten etwa senkrecht zur Rohroberfläche (3) verlaufen und dessen der Rohroberfläche (3) zugewandte Schmalseite über eine unter Zuhilfenahme eines Zusatzwerkstoffes gebildete Schweißnaht (5) mit der Rohroberfläche (3) verbunden ist, **dadurch gekennzeichnet**, daß die Schweißnaht (5) über ihre gesamte Breite eine etwa konstante, vergleichsweise geringe Dicke aufweist.

7. Rippenrohr nach Anspruch 6, **dadurch gekennzeichnet**, daß der Querschnitt der Schweißnaht nach Art eines Rechtecks ausgebildet ist, dessen Langseiten etwa parallel zur Rohroberfläche (3) verlaufen.

8. Rippenrohr nach Anspruch 6 oder 7, **dadurch gekennzeichnet**, daß die Schweißnaht (5) auf beiden Seiten ein Stück über das angeschweißte Band (4) hinaus vorsteht.

## Claims

1. Process for the manufacture of finned tubes made of metal, paricularly heat-exchanger tubes (1), where at least one endless strip (4), forming the fins, is wrapped around a rotating tube body (2) in roughly helical fashion and the narrow side of the strip (4) facing the tube body (2) being joined to the tube surface using a filler, by means of a welding device (7) and that the working end of the welding device (7) is inserted into the free wedge-shaped space between the tube surface (3) and the strip to be wrapped (4) **characterised in** that the welding device (7) is guided at the same angle relatively to the tube axis as the strip (4) forming the fins is to be fed in, in that the welding device (7) is used to apply a welding bead (11), which runs exactly in the area of the joint between the strip (4) and the tube surface (3), to the tube surface using a filler, before the narrow edge of the strip (4) to be joined makes contact, that the welding bead (11) is roughly as wide as the thickness of the strip (4), and in that the narrow edge of the strip (4) to be joined is pressed into the welding bead (11) while it is still liquid.

2. Process as per claim 1 or 2, **characterised in** that the strip (4) to be wrapped around the tube surface (3) is kept under tensile strain.

3. Process as per claim 1 or 2, **characterised in** that the strip (4) to be wrapped arount the tube surface (3) is pressed into the welding bead (11) by force applied in the radial direction.

4. Process as per claim 1 to 3, **characterised in** that the narrow edge of the strip (4) to be joined is also fused by means of the welding device (7).

5. Process as per claim 1 to 4, **characterised in** that the welding area is blanketed with inert gas (18).

6. Finned tube made of metal, particularly a heat-exanger tube manufactored by a process according to one of the claims 1 to 5, consisting of a cylindrical tube body (2) and a strip (4) wrapped around it in helical fashion, the broad sides of which are roughly perpendicular to the tube surface (3) and whose narrow side facing the tube surface (3) is joined to the surface (3) by a welded seam (5) using a filler, **characterised in** that the welded seam (5) has a roughly constant, comparatively small thickness over its entire width.

7. Finned tube as claim 6, **characterised in** that the cross-section of the welded seam is designed in the manner of a rectangle, whose long sides lie roughly parallel to the tube surface (3).

8. Finned tube as per claim 6 or 7, **characterised in** that the welded seam (5) projects slightly beyond the welded-on strip (4) on both sides.

## Revendications

1. Procédé de fabrication de tubes à ailettes en métal, en particulier de tubes (1) d'échangeur de chaleur, dans lequel au moins une bande sans fin (4) formant les ailettes est amenée tangentiellement au contact d'un corps de tube (2) mis en rotation et est enroulée à peu près en hélice sur celui-ci, la tranche de la bande (4) dirigée vers le corps de tube est fixée à la surface du tube au moyen d'un appareil de soudage (7) avec utilisation d'un métal d'apport et l'extrémité de travail de l'appareil de soudage (7) est guidée dans l'espace libre en forme de coin entre la surface (3) du tube et la bande (4) à enrouler, caractérisé en ce que l'appareil de soudage (7) est guidé sous le même angle, par rapport à l'axe du tube, que la bande (4) à amener qui forme les ailettes, en ce qu'il est appliqué sur la surface (3) du tube, avant la mise en contact de la tranche à fixer de la bande (4) et au moyen de l'appareil de soudage (7) avec utilisation du métal d'apport, un cordon de soudure (11) qui s'étend exactement dans la zone de fixation de la bande (4) à la surface (3) du tube, en ce que le cordon de soudure (11) est formé de façon à être à peu près aussi large que l'épaisseur de la bande (4), et en ce que la tranche à fixer de la bande (4) est pressée dans le cordon de soudure (11) encore liquide.

2. Procédé selon la revendication 1, caractérisé en ce que la bande (4) à enrouler sur la surface (3) du tube est maintenue sous tension par traction.

3. Procédé selon la revendication 1 ou 2, caractérisé en ce que la bande (4) à enrouler sur la surface (3) du tube est pressée dans le cordon de soudure (11) par une force appliquée en direction radiale.

4. Procédé selon l'une quelconque des revendications 1 à 3, caractérisé en ce que la tranche à fixer de la bande (4) est également fondue au moyen de l'appareil de soudage (7).

5. Procédé selon l'une quelconque des revendications 1 à 4, caractérisé en ce qu'une enveloppe de gaz protecteur (18) est projetée dans la région de soudage.

6. Tube à ailettes en métal, en particulier tube d'échangeur de chaleur, fabriqué par le procédé selon l'une quelconque des revendications 1 à 5, se composant d'un corps cylindrique de tube (2) ainsi que d'une bande (4) qui est enroulée en hélice sur celui-ci, dont les côtés larges s'étendent à peu près perpendiculairement à la surface (3) du tube et dont la tranche dirigée vers la surface (3) du tube est fixée à la surface (3) du tube par un cordon de soudure (5) formé à l'aide d'un métal d'apport, caractérisé en ce que le cordon de soudure (5) présente, sur toute sa largeur, une épaisseur relativement faible, à peu près constante.

7. Tube à ailettes selon la revendication 6, caractérisé en ce que la section transversale du cordon de soudure est réalisée à la manière d'un rectangle dont les grands côtés sont à peu près parallèles à la surface (3) du tube.

8. Tube à ailettes selon la revendication 6 ou 7, caractérisé en ce que le cordon de soudure (5) fait un peu saillie des deux côtés au-delà de la bande (4) soudée.
